# EUROPÄISCHE PATENTSCHRIFT

(11) **EP 2 886 239 B1**
(45) Veröffentlichungstag und Bekanntmachung des Hinweises auf die Patenterteilung: **29.06.2016**
(21) Anmeldenummer: 14199931.8
(22) Anmeldetag: 23.12.2014
(51) Int. Cl.: B23K 26/03, B23K 26/04, G06T 7/00, G06T 7/40

(54) **VERFAHREN UND VORRICHTUNG ZUR ÜBERWACHUNG UND REGELUNG DER BEARBEITUNGSBAHN BEI EINEM LASER-FÜGEPROZESS**
METHOD AND DEVICE FOR MONITORING AND CONTROLLING THE PROCESSING PATH OF A LASER JOINING PROCESS
PROCÉDÉ ET DISPOSITIF DE SURVEILLANCE ET DE RÉGULATION DE LA TRAJECTOIRE D'USINAGE LORS D'UN PROCESSUS D'ASSEMBLAGE À LASER

(30) Priorität: 23.12.2013 DE 102013022085
(43) Veröffentlichungstag der Anmeldung: 24.06.2015
(73) Patentinhaber: Fraunhofer-Gesellschaft zur Förderung der angewandten Forschung e.V., 80686 München (DE); Carl Cloos Schweisstechnik GmbH, 35708 Haiger (DE)
(72) Erfinder: Krämer, Sebastian, 22761 Hamburg (DE); Leibe, Bastian, 52134 Herzogenrath (DE); Drenker, Alexander, 6291 JA Vaals (NL); Paul, Christian, 35686 Dillenburg (DE); Abels, Peter, 52477 Alsdorf, Rheinl (DE); Fiedler, Wolfgang, 52074 Aachen (DE)
(74) Vertreter: Gagel, Roland

(56) Entgegenhaltungen:
- DE-A1- 10 335 501
- DE-A1- 19 852 302
- WEI-YING MA ET AL: "EdgeFlow: A Technique for Boundary Detection and Image Segmentation", IEEE TRANSACTIONS ON IMAGE PROCESSING, IEEE SERVICE CENTER, PISCATAWAY, NJ, US, Bd. 9, Nr. 8, 1. August 2000 (2000-08-01), XP011025639, ISSN: 1057-7149

## Beschreibung

### Technisches Anwendungsgebiet

Die vorliegende Erfindung betrifft ein Verfahren und eine Vorrichtung nach dem Oberbegriff der Ansprüche 1 und 11, siehe zum Beispiel Dokument DE 198 52 302 A.

Bei der Lasermaterialbearbeitung wird häufig ein fokussierter Laserstrahl oder ein Laserstrahl mit angepasster Leistungsdichteverteilung - ggf. gekoppelt mit weiteren Energiequellen, wie z. B. einem Lichtbogen - entlang einer Bearbeitungsbahn auf der Oberfläche eines Werkstücks bewegt, um ein gewünschtes Bearbeitungsergebnis zu erzielen, bspw. eine Schweißnaht, eine Schnittfuge oder eine partielle Oberflächenveredelung. Je nach Anforderungen an die Bahngenauigkeit und Bahngeschwindigkeit werden zur Bewegung der Bearbeitungsoptik, mit der der Bearbeitungslaserstrahl auf die Oberfläche fokussiert und/oder geeignet geformt wird, entweder numerisch gesteuerte (NC) mehrachsige Handling- oder kostengünstigere Robotersysteme eingesetzt.

Die Programmierung der Bearbeitungsbahn erfolgt bei diesen Anwendungen vorab bei der Planung in einem Offline-Programmiersystem oder mit dem sog. Teach-In-Verfahren. Bei letzterem wird die Bahn direkt am Bauteil Punkt für Punkt mit dem Bearbeitungskopf angefahren und die jeweiligen Achspositionen werden in die Steuerung des Handlingsystems oder des Roboters übernommen. Weisen die Werkstückabmessungen jedoch Schwankungen auf, die größer als die für den jeweiligen Lasermaterialbearbeitungsprozess zulässigen Abweichungen sind, so ist eine Korrektur der Bahn entweder durch ein weiteres Teach-In am betreffenden Werkstück oder - für eine Serienproduktion wirtschaftlicher - der Einsatz von Sensoren und Reglern zur automatischen Kompensation der Abweichungen erforderlich. Mit Hilfe dieser Sensoren lassen sich dann vorteilhaft auch Abweichungen von der programmierten Bearbeitungsbahn kompensieren, die erst während des Bearbeitungsprozesses, bspw. durch thermisch bedingten Verzug des Werkstücks, entstehen.

Darüber hinaus sind in Vorrichtungen zur Durchführung von Laser-Fügeprozessen in der Regel weitere optische Sensoren vorhanden, die der Überwachung des Fügeprozesses dienen. Sie werden zunehmend eingesetzt, um die stetig steigenden Anforderungen der Qualitätssicherung zu erfüllen und die Einhaltung von Toleranzen vollständig aufzuzeichnen und nachvollziehbar zu dokumentieren.

### Stand der Technik

Für die Überwachung und Regelung der Bearbeitungsbahn bei einem Laser-Fügeprozess stehen bereits kommerziell erhältliche Systeme zur Verfügung, die entweder lateral angeordnete Sensoren oder lateral angeordnete Lichtquellen einsetzen. Mit den Lichtquellen werden geometrische Figuren, wie bspw. Linien oder Kreise, auf die Werkstückoberfläche projiziert. Aus der Abbildung dieser projizierten geometrischen Figuren wird dann durch Triangulation die Geometrie der Werkstückoberfläche oder einer dort verlaufenden Stoßfuge ermittelt. Häufig ist bei dieser Technik für die Detektion der Stoßfuge eine Kantenvorbereitung erforderlich, bei der die Flanken der Stoßfuge so strukturiert werden, dass sie mit einem Lichtschnitt-Triangulationssensor zuverlässig erkannt werden kann. Die lateral bezüglich des Bearbeitungskopfes angeordneten Sensoren oder Lichtquellen bilden jedoch Störkonturen, die die Zugänglichkeit zum Werkstück einschränken. Der Einsatz dieser Systeme ist daher auf Werkstücke mit hinreichend konvexer Geometrie beschränkt. Für das Fügen von 3D-Strukturen sind diese Systeme häufig nicht geeignet.

Für die Überwachung des Fügeprozesses selbst werden in der Regel örtlich integrierende Detektoren oder ortsauflösende bildgebende Sensoren zusätzlich im oder am Bearbeitungskopf installiert. Mit diesen Detektoren oder Sensoren wird dann die Qualität des Laserprozesses überwacht und der Verlauf des Laserprozesses vollständig aufgezeichnet und damit dokumentiert. Diese Detektoren oder Sensoren sind eigenständig und unabhängig von den zur Fugenfolge verwendeten Lichtschnitt-Triangulationssensoren.

Aus der DE 198 52 302 A ist ein Verfahren zum Bearbeiten von Werkstücken mit Laserstrahlung bekannt, bei dem vom Werkstück ausgehende Lichtstrahlung unter Nutzung der Bearbeitungsoptik aufgenommen und mit einem Detektor einer Prozessüberwachungseinrichtung ausgewertet wird. Bei dem Verfahren wird die Oberfläche des Werkstücks mit einer zusätzlichen Beleuchtungsquelle beleuchtet und nicht nur die der Prozessüberwachung dienende Lichtstrahlung sondern auch das vom Werkstück reflektierte Beleuchtungslicht durch die Bearbeitungsoptik hindurch mit dem Detektor erfasst. Dadurch wird ein kompakter Aufbau der Vorrichtung im Bereich des Bearbeitungskopfes erreicht. Über die optische Messung an der Werkstückoberfläche kann zusätzlich zur Prozessüberwachung eine Messung des Abstands zwischen der Bearbeitungsoptik und dem Werkstück und/oder eine Vermessung der Werkstückgeometrie vor der Bearbeitungsstelle und/oder eine Vermessung der nach der Bearbeitung vorhandenen Nahtgeometrie und/oder eine Vermessung des an der Bearbeitungsstelle erzeugten Schmelzbades erfolgen. Die Nahtvermessung kann hierbei mit dem Lichtschnittverfahren durchgeführt werden, um jeweils die Nahtgeometrie auf Bearbeitungsfehler prüfen zu können. Eine Möglichkeit zur Regelung der Bearbeitungsbahn auf Basis einer Ermittlung der Position der Stoßfuge wird durch diese Druckschrift nicht vermittelt.

Die Aufgabe der vorliegenden Erfindung besteht darin, ein Verfahren sowie eine Vorrichtung zur Überwachung und Regelung der Bearbeitungsbahn bei einem Laser-Fügeprozess anzugeben, die sich auch bei der Bearbeitung von 3D-Strukturen einsetzen lassen und eine robuste Detektion der Stoßfuge für eine autonome Regelung der Bearbeitungsbahn des Bearbeitungslaserstrahls ermöglichen. Das Verfahren und die Vorrichtung sollen sich insbesondere auch bei einem Laserstrahl-Lichtbogen-Hybridschweißprozess einsetzen lassen.

### Darstellung der Erfindung

Die Aufgabe wird mit dem Verfahren und der Vorrichtung gemäß den Patentansprüchen 1 und 11 gelöst. Vorteilhafte Ausgestaltungen des Verfahrens und der Vorrichtung sind Gegenstand der abhängigen Patentansprüche oder lassen sich der nachfolgenden Beschreibung sowie dem Ausführungsbeispiel entnehmen.

Bei dem vorgeschlagenen Verfahren zur Überwachung und Regelung der Bearbeitungsbahn bei einem Laser-Fügeprozess, bei dem ein Bearbeitungslaserstrahl über eine Bearbeitungsoptik auf eine Oberfläche zu fügender Werkstücke gerichtet und auf der Bearbeitungsbahn entlang einer Stoßfuge der Werkstücke geführt wird, wird ein Bereich der Oberfläche koaxial zum Bearbeitungslaserstrahl mit Beleuchtungsstrahlung homogen, d.h. insbesondere unstrukturiert, beleuchtet und von dem Bereich reflektierte Beleuchtungsstrahlung durch wenigstens einen Teil der Bearbeitungsoptik hindurch ortsaufgelöst mit einem Bildsensor erfasst und ausgewertet. Aus den vom Bildsensor erhaltenen Bildern wird dabei mittels automatisierter texturbasierter Bildverarbeitung eine Position der Stoßfuge und eine Position einer vom Bearbeitungslaserstrahl im Werkstückmaterial induzierten Kapillare bestimmt und die Bearbeitungsbahn des Bearbeitungslaserstrahls dann in Abhängigkeit von den jeweils erfassten Positionen der Stoßfuge und der Kapillare geregelt. Die Regelung erfolgt in bekannter Weise derart, dass der Bearbeitungslaserstrahl möglichst exakt der Stoßfuge folgt.

Damit lässt sich bei einer vorprogrammierten Bearbeitungsbahn, wie sie im einleitenden Teil der vorliegenden Beschreibung bereits angeführt wurde, bei Schwankungen der Werkstückgeometrie oder sonstigen Abweichungen während des Bearbeitungsprozesses die Bearbeitungsbahn automatisiert anpassen, um entsprechende Schwankungen oder Abweichungen beim Fügen zu kompensieren. Durch die koaxiale Beleuchtung und die Erfassung des reflektierten Beleuchtungslichtes durch die Bearbeitungsoptik hindurch wird ein kompakter Aufbau der Fügevorrichtung erreicht, so dass auch eine bessere Zugänglichkeit zu den Werkstücken beim Fügen von 3D-Strukturen ermöglicht wird. Mit dem für die Fugen- und Kapillar-Detektion genutzten Bildsensor lässt sich gleichzeitig auch die bisher übliche Prozessüberwachung durchführen, bspw. durch Identifikation und Vermessung des Schmelzbades in den Bildern und/oder durch Erfassung der vom Werkstück emittierten Sekundärstrahlung, insbesondere der Wärmestrahlung im Bereich der Bearbeitungsstelle. Unter der bei dem vorgeschlagenen Verfahren eingesetzten texturbasierten Bildverarbeitung ist hierbei zu verstehen, dass die Bildverarbeitung auf der lokal variierenden Reflexion des Beleuchtungslichtes an der Werkstückoberfläche basiert, aus der Texturinformation gewonnen und verarbeitet wird, bspw. über den Zwischenschritt eines Texturbildes. Aus dieser Texturinformation lässt sich dann bspw. die Lage der Stoßfuge, der durch den Bearbeitungsstrahl induzierten Kapillare (Keyhole) oder auch die Lage und Ausdehnung des beim Bearbeitungsprozess erzeugten Schmelzbades ermitteln. Unter einer Textur im Sinne der vorliegenden Patentanmeldung sind Merkmale zu verstehen, die unabhängig von den absoluten Werten der Pixelintensität und des absoluten Kontrastes mittels digitaler Bildverarbeitung identifiziert und klassifiziert werden können. Texturbasierte Bildverarbeitung wertet die Bildinformation in einer von der Helligkeit der Pixel bzw. Bildpunkte weitestgehend unabhängigen Methodik aus, um die Texturinformation zu gewinnen, und unterscheidet sich daher erheblich von einer reinen auf Basis der Helligkeit der Bildpunkte basierenden Bildverarbeitung.

Das vorgeschlagene Verfahren lässt sich auch sehr vorteilhaft beim Laserstrahl-Lichtbogen-Hybridschweißen einsetzen. Dabei wird dem Bearbeitungsbereich flüssiges Fügematerial zum Auffüllen der Stoßfuge zugeführt. Dies erfolgt durch Zuführung eines Drahtes, der durch eine Lichtbogen-Schweißtechnik über starke Strompulse an der Spitze aufgeschmolzen wird, um das Fügematerial damit tröpfchenweise zuzuführen. Die Beleuchtung der Oberfläche erfolgt dabei mit einer gepulst betriebenen Lichtquelle, vorzugsweise mit einem gepulsten Beleuchtungslaser, der jeweils synchronisiert zu den Strompulsen für den Lichtbogen in einem Zeitraum zwischen zwei aufeinander folgenden Strompulsen einen Beleuchtungspuls abgibt. Die Bilderfassung erfolgt dabei jeweils gleichzeitig mit dem Beleuchtungspuls. Dadurch wird ein Überstrahlen der mit dem Bildsensor aufgenommenen Bilder durch den Lichtbogen vermieden. Die Beleuchtungspulse können dabei - je nach Strompulsfrequenz - nach jedem Strompuls oder auch jeweils nach einer festen Anzahl von Strompulsen ausgelöst werden.

Vorzugsweise wird als Beleuchtungslaser ein Superpuls-Diodenlaser eingesetzt, der aus einem Diodenlaserbarren oder auch aus einem Diodenlaserarray bestehen kann. Unter einem Superpuls-Diodenlaser ist ein Diodenlaser zu verstehen, der eine hohe Pulsleistung liefert, die im CW-Betrieb nicht erreichbar wäre. Die Laserpulse werden dabei wiederum synchron und zeitverzögert zu den Schweißstrompulsen und gleichzeitig mit dem Verschluss des Bildsensors angesteuert.

In einer weiteren bevorzugten Ausgestaltung wird zusätzlich ein Abstandssensor eingesetzt, der den Arbeitsabstand des Bearbeitungskopfes bzw. der darin enthaltenen Bearbeitungsoptik in Richtung der Propagation des Bearbeitungslaserstrahls (z-Richtung), d.h. in Richtung des Werkstücks, während der Bearbeitung kontinuierlich oder in kurzen zeitlichen Abständen ermittelt. Die Messung erfolgt dabei ebenfalls durch die Bearbeitungsoptik hindurch, vorzugsweise koaxial zum Bearbeitungslaserstrahl. Die Messung des Abstandes kann bspw. mittels ToF (Time of Flight), mittels OCT (optische Kohärenz-Tomographie), mittels Radar oder mittels Triangulation erfolgen. Die entsprechenden Techniken für die Abstandsmessung sind dem Fachmann bekannt. Auf Basis der Abstandsmessung kann dann auch der Abstand der Bearbeitungsoptik zur Werkstückoberfläche entsprechend geregelt werden. In einer besonders bevorzugten Ausgestaltung wird für die Abstandmessung ein Doppelspaltsensor eingesetzt, wie er bspw. aus der DE 4206499 C2 bekannt ist.

Eine generelle Schwierigkeit bei der Fugendetektion beim Laserfügen besteht darin, dass sowohl die beleuchteten Werkstückoberflächen als auch die gesuchte Fuge abhängig von Material, Prozess- und Aufnahmesystem sehr unterschiedlich aussehen können. Aufgrund der Dynamik des Gesamtsystems ist es schwer möglich, die Intensitätsverteilung (Helligkeit) des akquirierten Bildmaterials vorherzusagen. Insbesondere kann nicht davon ausgegangen werden, dass Intensitätsänderungen an der Stoßfuge besonders ausgeprägt sind. Konventionelle, allein auf lokalen Intensitäten basierende Analyseverfahren sind daher schwer zu konfigurieren und während des Betriebs fehleranfällig. Bei der hier vorgeschlagenen texturbasierten Bildverarbeitung werden deutlich mehr Informationen aus der Umgebung eines Bildpunktes bzw. Pixels des von dem Bildsensor erfassten Bildes für die Auswertung verwendet.

In einer bevorzugten Ausgestaltung wird bei der Bildverarbeitung hierbei jedem Bildpunkt des jeweils vom Bildsensor erhaltenen Bildes, der sich in einem vorgebbaren interessierenden Bereich des Bildes befindet, ein Merkmalsvektor aus mehreren skalaren Werten zugeordnet. Dieser Merkmalsvektor kann durch Anwendung mehrerer unterschiedlicher Filtermasken auf das Bild oder durch Auswertung oder Aufnahme von Intensitätswerten von den Bildpunkt umgebenden Bildpunkten im Bild erhalten werden. Hierbei werden vorzugsweise jeweils Filter gleichartiger Form in unterschiedlicher Größe verwendet. So können bei der gleichzeitigen Filterung mit mehreren Filtermasken (Filterbank) z.B. mehrere in Form und Größe unterschiedliche Kantenfilter und auch andere Strukturen repräsentierende Filter, bspw. kreisähnliche Strukturen repräsentierende Filter, verwendet werden. Die Filterantwort der eingesetzten Filter ist an den Stellen im Bild maximal, an denen entsprechend kantenähnliche oder kreisähnliche Strukturen auftreten. Der Merkmalsvektor jedes Bildpunktes enthält dabei die für die unterschiedlichen Filter erhaltenen Filterantworten an der Stelle dieses Bildpunktes, d.h. bspw. bei Anwendung von fünf Filtern fünf skalare Werte. Der Merkmalsvektor kann auch durch geordnetes Einlesen der Intensitätswerte der um den Bildpunkt herum angeordneten Bildpunkte erfolgen. Bspw. kann eine Nachbarschaft aus acht Bildpunkten des betrachteten Bildpunktes im Uhrzeigersinn jeweils betrachtet und deren Intensitätswerte in dieser Reihenfolge in den Merkmalsvektor aufgenommen werden. Eine weitere Möglichkeit besteht in der Analyse der Intensitätswerte der Bildpunkte um den betrachteten Bildpunkt herum. Dabei werden jedoch nicht die Intensitätswerte dieser Bildpunkte gespeichert. Vielmehr werden die Intensitätswerte dieser benachbarten Bildpunkte in einer festgelegten Reihenfolge mit dem Intensitätswert des betrachteten Bildpunktes verglichen (z. B. Analyse der acht benachbarten Bildpunkte im Uhrzeigersinn). Größere Werte können dabei mit dem Wert "1", kleinere oder gleich große Werte mit dem Wert "0" codiert werden. Die entsprechenden Werte werden wiederum in der festgelegten Reihenfolge in den Merkmalsvektor des betrachteten Bildpunktes aufgenommen. Dadurch ergibt sich eine binäre Codierung der Nachbarschaft des Bildpunktes im Merkmalsvektor dieses Bildpunktes.

Die auf diese Weise erhaltenen Merkmalsvektoren der Bildpunkte im interessierenden Bildbereich werden dann durch Vergleich mit vorab aus Trainingsdaten ermittelten Merkmalsvektoren oder auch durch reine Clusterbildung einer von mehreren unterschiedlichen Texturen zugeordnet. Die Texturzuordnung (Klassifizierung) erfolgt dabei vorzugsweise durch Verwendung einer vorangehenden Lernphase. Hierbei wird eine Menge von Merkmalsvektoren von vorab bekanntem Bildmaterial (Trainingsmaterial) durch eine Clustering-Technik stark reduziert. Dadurch werden Repräsentanten des trainierten Bildmaterials ermittelt, die texturspezifische Charakteristika codieren. Neuem Bildmaterial, d.h. Echtzeit- bzw. Live-Bildern der durchgeführten Prozessüberwachung, können auf dieser Basis pixelweise ermittelte Texturen zugeordnet werden, indem mit Hilfe eines Ähnlichkeitsmaßes ein Vergleich jedes neuen Merkmalsvektors mit den antrainierten Repräsentanten stattfindet. Aus den entsprechenden Zuordnungen der jeweils betrachteten Bildpunkte wird schließlich ein Texturbild erzeugt, in dem jeder Bildpunkt des interessierenden Bereiches mit einem Helligkeitswert dargestellt wird, der wiederum der entsprechenden Textur zugeordnet ist. Aus diesem Texturbild werden dann die Positionen der Stoßfuge und der Kapillare sowie optional auch Positionen von weiteren Objekten bestimmt. Vorzugsweise erfolgt die Bestimmung der Stoßfuge über eine Gradientenbildung aus dem Texturbild.

Die Fugendetektion kann dabei über eine Gradientenbildung durch Anwendung einer aus zwei disjunkten Halbmasken gebildeten Maske erfolgen. Es wird dabei eine Maske generiert, die aus zwei disjunkten gegenüber liegenden Teilen besteht, z.B. einem in der Mitte geteilten Quadrat oder zwei gegenüber liegenden Halbkreisen. Diese Maske wird über jedem Pixel im Bild bzw. dem betrachteten Bildausschnitt zentriert und in der Orientierung variiert. Für jede Position und Orientierung werden zwei Histogramme erstellt, in denen die Zuordnung der unter der Maske liegenden Pixel zu den verschiedenen Texturen aufsummiert werden. Durch statistische Berechnungen wird anschließend ermittelt, wie stark sich die Histogramme der beiden Hälften der Maske in den unterschiedlichen Positionen und Orientierungen unterscheiden. Hierzu kann bspw. die sog. Chi-Quadrat-Formel eingesetzt werden, wie sie z.B. in J. Malik et al., "Textons, Contours and Regions: Cue Integration in Image Segmentation", Proceedings of the International Conference on Computer Vision, Corfu, Greece, September 20-25, 1999, IEEE Computer Society, Seiten 918-925 zum selben Zweck demonstriert wird. Dieses Distanzmaß wird benutzt, um die Stärke des Übergangs zwischen texturierten Flächen zu detektieren. Zusätzlich kann optional ein auf den Helligkeitswerten des ursprünglichen Bildes basierender Gradient ermittelt und mit dem Texturgradienten verrechnet werden. Die Fugenposition und -lage wird schließlich vorzugsweise durch eine Hough Transform, einer Standardtechnik zur Ermittlung von Geraden in Graustufenbildern, aus der Gradienteninformation ermittelt.

In einer Weiterbildung des vorgeschlagenen Verfahrens können die Merkmalsvektoren der Bildpunkte zusätzlich durch Vergleich mit vorab aus Trainingsdaten ermittelten Merkmalsvektoren einer von mehreren in den Trainingsdaten vorhandenen Objekte zugeordnet werden, um die Position und Erstreckung dieser Objekte im Bild zu erkennen. Hierbei werden die entsprechenden Objekte auf dem vorab bekannten Bildmaterial (Trainingsmaterial) pixelweise markiert (annotiert). Die zugehörigen Merkmalsvektoren werden entsprechend in Gruppen eingeteilt, die den jeweiligen Objekten entsprechen, bspw. Schweißnaht/Fuge, unveränderte Werkstückoberfläche, Prozessbereich, Förderdraht usw.. Während der Analysephase, also in Echtzeit während des Bearbeitungsprozesses, werden die zu den Bildpunkten der beim Prozess aufgezeichneten Bilder gehörenden Merkmalsvektoren berechnet. Für jeden Merkmalsvektor wird dann über ein Ähnlichkeitsmaß ermittelt, zu welcher der bekannten Objekt-Gruppen dieser vermutlich gehört, indem ein Abgleich mit den vorbekannten, in Gruppen eingeteilten Merkmalsvektoren stattfindet. Auf diese Weise lässt sich eine Objekterkennung bezüglich vorhandener Bildinhalte durchführen. Für jeden Bildpunkt werden nun die in einem Fenster um den Bildpunkt herum liegenden Merkmalsvektoren und deren Gruppenzugehörigkeit ermittelt. Hieraus ergibt sich angenähert eine diskrete Wahrscheinlichkeitsverteilung, die auf das jeweils abgebildete Objekt schließen lässt.

Auf diese Weise lässt sich bspw. das Schmelzbad identifizieren, so dass dann dessen Länge und Breite automatisiert bestimmt werden kann. Weiterhin können neben der Position der Fuge und der vom Laser induzierten Kapillare auch andere geometrische Merkmale des Prozesses ermittelt werden, bspw. beim Laserstrahl-Lichtbogen-Hybridschweißen der Überstand (Stickout) des Drahtes, der Durchmesser des vom Draht abgelösten Tropfens, usw.. Auch andere Oberflächencharakteristika lassen sich durch die texturbasierte Bildverarbeitung beschreiben und klassifizieren. So hat je nach Prozessparametern die Schweißnaht eine sehr komplexe Oberflächenstruktur. Die Naht selbst und ihre Grenzen (Ränder) sind dadurch lokalisierbar. Neben dem Laserstrahl-Lichtbogen-Hybridschweißen ist dies besonders nützlich für die Anwendung beim Laser-Löten.

Die vorgeschlagene Vorrichtung zur Überwachung und Regelung der Bearbeitungsbahn bei einem Laser-Fügeprozess umfasst einen Bearbeitungskopf mit einer Bearbeitungsoptik, über die ein eingekoppelter Bearbeitungslaserstrahl auf eine Bearbeitungsebene fokussierbar ist, einer Beleuchtungseinheit zur Beleuchtung eines Bereichs der Bearbeitungsebene koaxial zum Bearbeitungslaserstrahl sowie einen ortsauflösenden Bildsensor, mit dem zumindest ein Teil des mit der Beleuchtungseinheit homogen beleuchteten Bereichs der Bearbeitungsebene durch wenigstens einen Teil der Bearbeitungsoptik, vorzugsweise koaxial zum Bearbeitungslaserstrahl, erfassbar ist. Der Bildsensor ist mit einer Auswerte- und Steuereinrichtung verbunden, die aus den vom Bildsensor erhaltenen Bildern mittels texturbasierter Bildverarbeitung zumindest die Position der Stoßfuge und einer vom Bearbeitungslaserstrahl induzierten Kapillare in den im Bereich der Bearbeitungsebene angeordneten zu fügenden Werkstücken bestimmt und Steuersignale für eine Führung des Bearbeitungslaserstrahls mit einer Bewegungseinrichtung entlang der Stoßfuge liefert. Die Bewegungseinrichtung, bspw. ein Roboter, kann hierzu den Bearbeitungskopf relativ zu den Werkstücken oder die Werkstücke relativ zum Bearbeitungskopf bewegen.

Durch die bei der vorliegenden Vorrichtung in den Bearbeitungskopf integrierte Sensorik, bestehend aus Beleuchtungseinheit sowie wenigstens im Bildsensor, kann sowohl eine Identifikation der Stoßfuge als auch eine Überwachung des Laser-Fügeprozesses selbst erfolgen. Durch die Integration der Sensorik in den Bearbeitungskopf unter Nutzung der Bearbeitungsoptik für den optischen Strahlengang wird die Zugänglichkeit zu den zu fügenden Werkstücken vollständig erhalten.

In einer vorteilhaften Weiterbildung umfasst die Vorrichtung neben dem Bildsensor auch noch einen Abstandssensor, vorzugsweise einen Doppelspaltsensor, mit dem der Abstand des Bearbeitungskopfes zur Werkstückoberfläche bestimmbar ist. Die entsprechenden Signale dieses Doppelspaltsensors werden ebenfalls in der Auswerte- und Steuereinrichtung ausgewertet, um entsprechende Steuersignale für die Beibehaltung eines vorgebbaren Abstandes des Bearbeitungskopfes oder der Bearbeitungsoptik zur Oberfläche der Werkstücke auszugeben. Die Auswerte- und Steuereinrichtung regelt dabei die Bearbeitungsbahn des Bearbeitungslaserstrahls jeweils in Abhängigkeit von den ermittelten Positionen und Abständen.

Vorzugsweise ist die Auswerte- und Steuereinrichtung mit der Steuerung eines Roboter- oder Handlingsystems als Bewegungseinrichtung verbunden, die den Bearbeitungskopf entsprechend einer vorprogrammierten Bearbeitungsbahn des Bearbeitungslaserstrahls relativ zu den zu fügenden Werkstücken führt. Diese vorprogrammierte Bahn wird dabei zusätzlich durch die Steuersignale der Auswerte- und Steuereinrichtung beeinflusst, um eventuelle Abweichungen der Stoßfuge oder der Werkstückoberflächen von den der Programmierung der Bahn zugrunde liegenden Geometrien auszugleichen.

In einer bevorzugten Ausgestaltung umfasst die Vorrichtung auch eine Zufuhreinheit für einen Schweißdraht und eine damit verbundene Schweißstromquelle, um mit der Vorrichtung die Werkstücke mittels Laserstrahl-Lichtbogen-Hybridschweißen fügen zu können. In diesem Fall ist zusätzlich eine Synchronisationseinheit vorgesehen, die die von der Beleuchtungseinheit erzeugten Lichtpulse mit den Schweißstrompulsen synchronisiert und die Beleuchtungspulse jeweils zeitverzögert zu den Schweißstromimpulsen und gleichzeitig mit dem Verschluss bzw. dem Aufnahmezeitpunkt des Bildsensors ansteuert.

In einer vorteilhaften Ausbildung der vorgeschlagenen Vorrichtung wird der Strahlengang der Beleuchtungseinheit koaxial um den Strahlengang des Bearbeitungslasers herumgeführt, so dass der Bearbeitungslaserstrahl und der Beleuchtungsstrahl durch unterschiedliche Flächen der Bearbeitungsoptik treten. Damit kann in Verbindung mit einer geeigneten Blende vermieden werden, dass unerwünschte Reflexe des Bearbeitungslaserstrahls von den Grenzflächen der optischen Bauelemente auf den Bildsensor gelangen. Diese Technik ist bspw. in der DE 102012012981 B4 beschrieben.

Mit dem vorgeschlagenen Verfahren und der zugehörigen Vorrichtung lässt sich eine autonome 2D-oder - im Falle der Nutzung eines zusätzlichen Abstandssensors - eine autonome 3D-Bahnregelung des Bearbeitungslaserstrahls entlang einer Stoßfuge realisieren. Gleichzeitig mit der Regelung auf Basis der Position der Stoßfuge und der Kapillare ermöglichen das Verfahren und die Vorrichtung auch eine automatisierte vollständige Prozessüberwachung. Die bei dem Verfahren und der Vorrichtung genutzte texturbasierte Bildauswertung ist robust und unempfindlich. Anders als bei intensitätsbasierten Auswerteverfahren werden die Ergebnisse durch Veränderung der Beleuchtung und Lichtverhältnisse nur geringfügig beeinflusst.

Das Verfahren und die Vorrichtung ermöglichen die Vorbereitung des Fügens mit Laserstrahlung bzw. mit einem Laser-Lichtbogen-Hybridprozess in einfacherer Weise. Hierzu können die Stoßfuge und die Kennzeichnung der Sollposition durch Einsatz der Vorrichtung vor dem Fügeprozess mittels Fadenkreuz auf dem Bildschirm des Systems visualisiert werden, so dass der Maschinenbediener bei der Bahnprogrammierung mittels Teach-In am Werkstück durch diese Darstellung unterstützt werden kann. Durch eine Echtzeit-Darstellung der mit dem Bildsensor erfassten Bilder an einem Bildschirm kann der Maschinenbediener zudem die Qualität des Fügeprozesses während des Schweißens aus sicherem Abstand am Bildschirm beobachten und beurteilen. Er muss sich hierzu nicht mehr unmittelbar im Gefahrenbereich der Prozesszone aufhalten.

### Kurze Beschreibung der Zeichnungen

Das vorgeschlagene Verfahren und die zugehörige Vorrichtung werden nachfolgend anhand eines Ausführungsbeispiels in Verbindung mit den Zeichnungen nochmals näher erläutert. Hierbei zeigen:
- Fig. 1: ein Beispiel für eine Ausgestaltung der vorgeschlagenen Vorrichtung;
- Fig. 2: eine stark schematisierte Darstellung eines mit dem Bildsensor aufgezeichneten Bereiches der Werkstückoberfläche beim Fügen zweier Werkstücke mit dem Laser-Lichtbogen-Hybridprozess;
- Fig. 3: ein Beispiel für ein bei der texturbasierten Bildverarbeitung erzeugtes Texturbild;
- Fig. 4: ein Beispiel für die Gradientenbildung aus dem Texturbild; und
- Fig. 5: ein Beispiel für die Identifikation der Stoßfuge aus dem Texturgradienten.

### Wege zur Ausführung der Erfindung

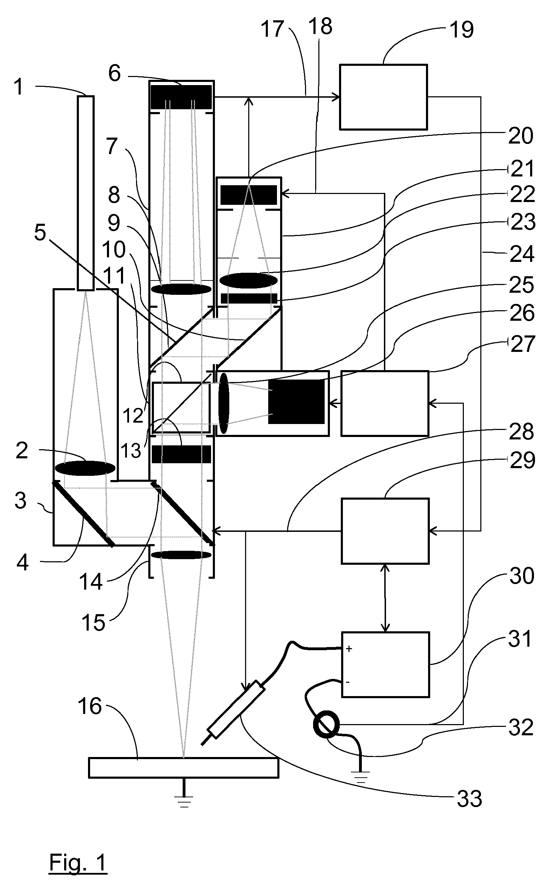

Figur 1 zeigt beispielhaft eine mögliche Ausgestaltung der vorgeschlagenen Vorrichtung im Falle eines Laser-Lichtbogen-Hybridschweißprozesses. Die Vorrichtung weist in diesem Beispiel ein Handlingsystem auf, durch das der Bearbeitungskopf relativ zu den Werkstücken bewegt wird. Dieses Handlingsystem kann aus einer mehrachsigen Anlage oder wie im vorliegenden Beispiel aus einem Roboter inklusive Robotersteuerung 29 und Fugenfolgeregelung 28 bestehen. Die Vorrichtung umfasst im vorliegenden Beispiel weiterhin einen MSG-Brenner 33 (MSG: Metallschutzgasschweißen), der mit einer Schweißstromquelle 30 verbunden ist. Im Bearbeitungskopf der Vorrichtung ist eine Bearbeitungsoptik 3 mit dichroitischem Strahlteiler 14, ein Beleuchtungslaser 26 mit Steuergerät 27 und eine Beobachtungseinrichtung 21 angeordnet. Der Beleuchtungslaser 26 erzeugt hierbei senkrecht zur Blattebene polarisiertes Licht. Die Beobachtungseinrichtung 21 weist einen Bildsensor 20 mit Abbildungsoptik 22, Blende und Bandpassfilter 23 zur koaxialen Prozessbeobachtung auf. Der Bearbeitungskopf weist weiterhin einen Abstandssensor auf, hier in Form eines Doppelspaltsensors 7 mit Abbildungsoptik 9 und Doppelspaltblende 8, ein Strahlteiler- und Spiegelkabinett 11 mit Polarisationsstrahlteiler 12 und einer λ/4 Verzögerungsplatte 13 für die Wellenlänge des Beleuchtungslasers. In einer Auswerteeinrichtung 19, die bspw. durch einen Industrie-PC gebildet sein kann, werden aus den akquirierten Bilddaten des Bildsensors 20 und des Zeilensensors 6, die über die Verbindung 17 mit der Auswerteeinrichtung 19 verbunden sind, die Position der Stoßfuge und der Arbeitsabstand sowie weitere geometrische Merkmale des Prozesses ermittelt.

Der Roboter 29 positioniert und bewegt über die Regelung 28 den gesamten Bearbeitungskopf mit Bearbeitungsoptik 3, Beleuchtungslaser 26 und Sensorik 7, 21 sowie den MSG-Brenner 33, der auch Bestandteil des Bearbeitungskopfes sein kann. Der Roboter ist hierbei mit der Auswerteeinrichtung 19 verbunden (Verbindung 24), über die er die ausgewerteten Positionen der Stoßfuge und der Kapillare in Echtzeit erhält, um die Bearbeitungsbahn mit der Fugenfolgregelung 28 in Abhängigkeit von diesen Positionen bei Bedarf entsprechend anzupassen.

Die Laserstrahlung eines Festkörperlasers wird unterhalb des Anschlusses der Transportfaser 1 mit der Linse 2 kollimiert, über einen Umlenkspiegel 4 sowie den dichroitischen Strahlteiler 14 geführt und schließlich mit der Linse 15 als Bearbeitungslaserstrahlung in die Wechselwirkungszone auf der Oberfläche eines Werkstücks 16 fokussiert. Der dichroitische Strahlteiler 14 reflektiert die Wellenlänge des Festkörperlasers, im vorliegenden Beispiel bei 1030 bis 1070 nm, und transmittiert die Beobachtungswellenlänge des Beleuchtungslasers 26, die in einem anderen Wellenlängenbereich liegt, beispielsweise im sichtbaren Wellenlängenbereich.

Oberhalb des dichroitischen Strahlteilers 14 ist das Spiegelkabinett 11 angeschlossen, in dessen unterer Hälfte der Polarisationsstrahlteiler 12 und die λ/4 Platte 13 installiert sind. Der Polarisationsstrahlteiler dient zur koaxialen Einkopplung der senkrecht zur Blattebene polarisierten Beleuchtungslaserstrahlung aus dem Beleuchtungslaser 26. Unterhalb der λ/4 Verzögerungsplatte 13 entsteht daraus zirkular polarisierte Beleuchtungslaserstrahlung. Um den Bereich um die Wechselwirkungszone, der mit dem CMOS-Bildsensor 20 beobachtet wird, auszuleuchten, wird die Beleuchtungslaserstrahlung mit der Linse 25 kollimiert. Die Brennweite dieser Linse ist so gewählt, dass die durch das optische System auf der Werkstückoberfläche erzeugten Abbildungen des Bildsensors 20 und des Beleuchtungslasers 26 zusammenfallen.

Die von der Umgebung der Wechselwirkungszone auf der Werkstückoberfläche 16 diffus reflektierte Beleuchtungslaserstrahlung ist ebenfalls zirkular polarisiert und wird oberhalb der λ/4 Platte 13 wieder in linear polarisierte Strahlung transformiert, wobei ihre Polarisationsrichtung jetzt in der Blattebene liegt und vom Polarisationsstrahlteiler 12 vollständig transmittiert wird. Der Vorteil gegenüber anderen Konzepten, die bisher 50% Strahlteiler in derartigen Bearbeitungsköpfen verwenden, besteht darin, dass hier Streustrahlung im Strahlengang vermieden wird, die den Kontrast in den koaxial erfassten Prozess- bzw. Oberflächenaufnahmen herabsetzt.

Oberhalb des Polarisationsstrahlteilers 12 wird die Beleuchtungslaserstrahlung über den 50%-Strahlteiler 5 und den Umlenkspiegel 10 auf den Doppelspaltsensor 7 und die Beobachtungseinrichtung 21 aufgeteilt. Das Strom-Spannungs-Wandler-Modul 32 gibt ein zum Schweißstrom der Schweißstromquelle 30 proportionales Spannungssignal 31 an das Steuergerät 27 des Beleuchtungslasers 26 aus. Im Steuergerät wird das Spannungssignal 31 mit einem Schwellwert verglichen. Wenn das Spannungssignal am Ende eines Strompulses der Schweißstromquelle unter diesen Schwellwert abfällt, wird eine Verzögerungszeit gestoppt, nach der sowohl der Verschluss des Bildsensors 20 über die Verbindung 18 geöffnet als auch gleichzeitig der Beleuchtungslaser 26 für eine definierte Belichtungszeit eingeschaltet wird.

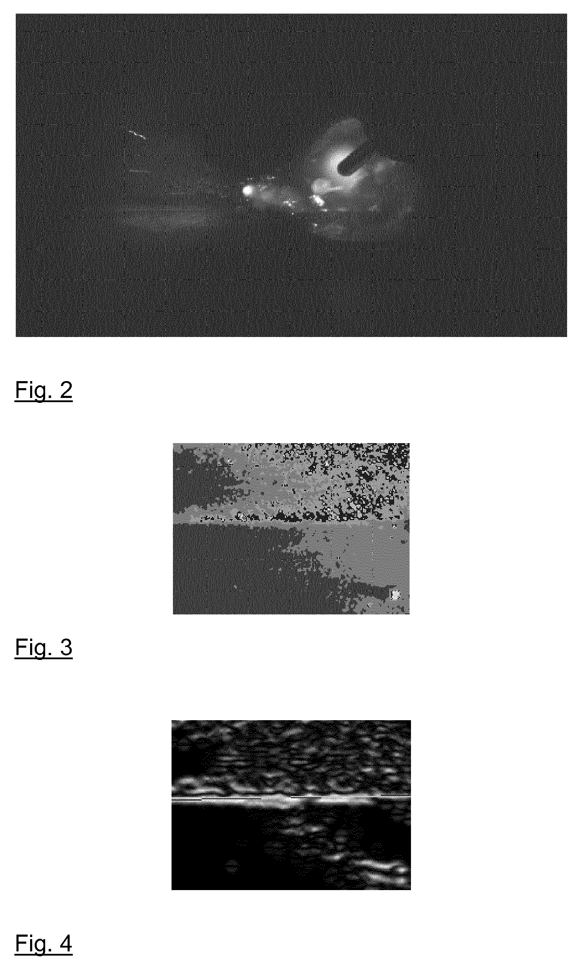

Figur 2 zeigt beispielhaft eine Einzelaufnahme mit dem Bildsensor 20, die beim Fügen eines T-Stoßes mit einer Kehlnaht aufgezeichnet wurde. In dieser Bildaufnahme ist links neben der Bildmitte die vom Bearbeitungslaserstrahl induzierte Kapillare (Keyhole) zu erkennen. Rechts neben dieser Kapillare ist in der Bildmitte zwischen dem sichtbaren Ende des Zusatzdrahtes und der Schmelze ein fliegender Tropfen zu erkennen, der mit dem Schweißstrompuls etwa zwei Millisekunden vor dem Zeitpunkt der Bildaufnahme vom Zusatzdraht abgeschmolzen wurde. Um das Ende des Zusatzdrahtes ist noch die Korona vom Lichtbogen zu erkennen. Bei einem stabilen Prozess wiederholt sich der Vorgang des Abtrennens des Tropfens periodisch mit jedem Strompuls der Schweißstromquelle, so dass bedingt durch den Stroboskopeffekt in der Bilderfolge des Bildsensors der Tropfen für den Betrachter an einem Bildschirm immer an derselben Position zu schweben scheint. Ein Maschinenbediener kann dann anhand dieser Bildelemente Draht, Tropfen, Lichtbogen und Schmelzbad die Stabilität und Qualität des Hybridprozesses visuell beurteilen. Vorzugsweise werden dem Betrachter daher die jeweiligen Bildaufnahmen des Bildsensors während der Bearbeitung an einem Bildschirm direkt dargestellt. Durch Speicherung der Bildaufnahmen kann auch eine Dokumentation des Prozesses erfolgen. Die stetig zunehmende Leistungsfähigkeit kommerziell verfügbarer Rechner und insbesondere der darin genutzten Grafikkarten mit immer größerer Anzahl parallel arbeitender Grafikprozessoren ermöglicht die Echtzeitimplementierung der vorgeschlagenen texturbasierten Bildverarbeitung. Damit können neben der Stoßfuge künftig auch die oben genannten Bildelemente automatisiert in Echtzeit erkannt und bewertet werden.

Bei der vorgeschlagenen texturbasierten Bildverarbeitung wird ein interessierender Bereich des jeweils aufgezeichneten Bildes betrachtet, im vorliegenden Beispiel der im linken Teil des Bildes vor der Kapillare liegende Bereich mit der Stoßfuge. In diesem Bereich werden für jeden Bildpunkt die bereits beschriebenen Merkmalsvektoren gebildet, um daraus durch Vergleich mit vorher ermittelten, jeweils einer Textur zugeordneten Repräsentanten derartiger Merkmalsvektoren, ein Texturbild zu erzeugen. Figur 3 zeigt ein Beispiel für ein derartiges Texturbild, in dem die Bildpunkte, die unterschiedlichen Texturen zugeordnet wurden, mit unterschiedlichen Helligkeitswerten dargestellt werden. Merkmalsvektoren, die der gleichen Textur zugeordnet wurden, sind mit identischen Helligkeitswerten dargestellt. Aus diesem Texturbild eines T-Stoßes erfolgt dann über die Berechnung der Texturgradienten eine Bestimmung der Lage der Stoßfuge im Bild. Figur 4 zeigt hierzu ein Beispiel des aus dem Texturbild der Figur 3 ermittelten Gradientenbildes.

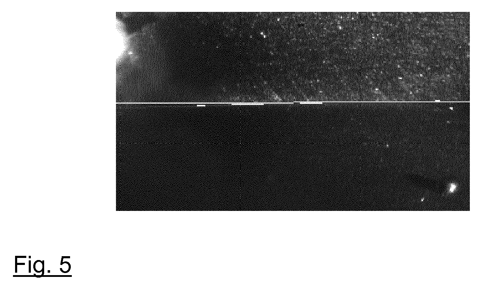

Aus diesem Gradientenbild kann schließlich die Stoßfuge identifiziert werden. Dies gilt ebenso für die Kapillare bzw. deren Position. Die Relativposition zwischen Kapillare und Stoßfuge wird für die Regelung der Bearbeitungsbahn eingesetzt. Figur 5 zeigt hierzu noch ein Beispiel für die Identifikation der Stoßfuge aus dem Texturgradienten. Die vom Laserstrahl induzierte Kapillare erscheint hier am linken Bildrand oberhalb der Fuge. Dies ist in diesem Beispiel zu Demonstrationszwecken beabsichtigt.

### Bezugszeichenliste

- 1: Transportfaser
- 2: Linse
- 3: Bearbeitungsoptik
- 4: Umlenkspiegel
- 5: 50%-Strahlteiler
- 6: Zeilensensor
- 7: Doppelspaltsensor
- 8: Doppelspaltblende
- 9: Abbildungsoptik
- 10: Umlenkspiegel
- 11: Spiegelkabinett
- 12: Polarisationsstrahlteiler
- 13: λ/4 Platte
- 14: dichroitischer Strahlteiler
- 15: Linse
- 16: Werkstückoberfläche
- 17: Verbindung zur Auswerteeinrichtung
- 18: Verbindung zwischen Steuergerät des Beleuchtungslasers und Bildsensor
- 19: Auswerteeinrichtung
- 20: Bildsensor
- 21: Beobachtungseinrichtung
- 22: Abbildungsoptik
- 23: Bandpassfilter
- 24: Verbindung zwischen Robotersteuerung und Auswerteeinrichtung
- 25: Linse
- 26: Beleuchtungslaser
- 27: Steuergerät
- 28: Fugenfolgeregelung
- 29: Robotersteuerung
- 30: Schweißstromquelle
- 31: Spannungssignal
- 32: Strom-Spannungs-Wandler-Modul
- 33: MSG-Brenner

## Patentansprüche

1. Verfahren zur Überwachung und Regelung der Bearbeitungsbahn bei einem Laser-Fügeprozess, insbesondere beim Laserstrahl-Lichtbogen-Hybridschweißen, bei dem
- ein Bearbeitungslaserstrahl über eine Bearbeitungsoptik (3) auf eine Oberfläche (16) zu fügender Werkstücke gerichtet und durch Bewegung der Werkstücke oder der Bearbeitungsoptik (3) auf der Bearbeitungsbahn entlang einer Stoßfuge der Werkstücke geführt wird,
- ein Bereich der Oberfläche (16) koaxial zum Bearbeitungslaserstrahl mit Beleuchtungsstrahlung homogen beleuchtet und von dem Bereich reflektierte Beleuchtungsstrahlung durch wenigstens einen Teil der Bearbeitungsoptik (3) hindurch ortsaufgelöst mit einem Bildsensor (20) erfasst und ausgewertet wird,
**dadurch gekennzeichnet,**
- **dass** aus den vom Bildsensor (20) erhaltenen Bildern mittels texturbasierter Bildverarbeitung eine Position der Stoßfuge und eine Position einer vom Bearbeitungslaserstrahl induzierten Kapillare bestimmt werden, und dass
- die Bearbeitungsbahn des Bearbeitungslaserstrahls in Abhängigkeit von den jeweils erfassten Positionen der Stoßfuge und der Kapillare geregelt wird.

2. Verfahren nach Anspruch 1,
**dadurch gekennzeichnet,**
**dass** beim Laserstrahl-Lichtbogen-Hybridschweißen die Beleuchtung mit einem gepulsten Beleuchtungslaser (26) erfolgt, der jeweils synchronisiert zu Strompulsen für den Lichtbogen in einem Zeitraum zwischen zwei aufeinander folgenden Strompulsen einen Beleuchtungspuls abgibt, wobei die Bilderfassung mit dem Bildsensor (20) jeweils gleichzeitig mit dem Beleuchtungspuls erfolgt.

3. Verfahren nach Anspruch 1 oder 2,
**dadurch gekennzeichnet,**
**dass** bei der Bildverarbeitung
- jedem Bildpunkt des jeweils vom Bildsensor (20) erhaltenen Bildes, der sich in einem vorgebbaren interessierenden Bereich des Bildes befindet, ein Merkmalsvektor zugeordnet wird, der durch Anwendung mehrerer unterschiedlicher Filtermasken auf das Bild oder durch Auswertung oder Aufnahme von Intensitätswerten von den Bildpunkt umgebenden Bildpunkten im Bild erhalten wird,
- die Merkmalsvektoren der Bildpunkte durch Vergleich mit vorab aus Trainingsdaten ermittelten Merkmalsvektoren oder durch Clusterbildung einer von mehreren unterschiedlichen Texturen zugeordnet werden,
- aus den Zuordnungen ein Texturbild erzeugt wird, in dem jeder Bildpunkt des interessierenden Bereiches mit einem die zugeordnete Textur repräsentierenden Helligkeitswert dargestellt wird, und
- zumindest die Positionen der Stoßfuge und der Kapillare aus dem Texturbild bestimmt werden.

4. Verfahren nach Anspruch 3,
**dadurch gekennzeichnet,**
**dass** die Position der Stoßfuge über eine Gradientenbildung zumindest aus dem Texturbild bestimmt wird.

5. Verfahren nach Anspruch 3 oder 4,
**dadurch gekennzeichnet,**
**dass** die Merkmalsvektoren der Bildpunkte durch Vergleich mit vorab aus Trainingsdaten ermittelten Merkmalsvektoren einer von mehreren in den Trainingsdaten vorhandenen Objekten zugeordnet werden, um die Position und Erstreckung der Objekte im Bild zu bestimmen.

6. Verfahren nach Anspruch 5,
**dadurch gekennzeichnet,**
**dass** die Position, die Länge und/oder die Breite eines Schmelzbades im Bild bestimmt werden.

7. Verfahren nach einem der Ansprüche 3 bis 6,
**dadurch gekennzeichnet,**
**dass** die Filtermasken wenigstens unterschiedliche Kantenfilter und unterschiedliche kreisförmige Filter umfassen.

8. Verfahren nach einem der Ansprüche 1 bis 7,
**dadurch gekennzeichnet,**
**dass** beim Laserstrahl-Lichtbogen-Hybridschweißen auch eine überstehende Länge eines für das Hybridschweißen eingesetzten Zusatzdrahtes und/oder eine Position eines aus dem Zusatzdraht abgelösten Tropfens mittels texturbasierter Bildverarbeitung aus den vom Bildsensor (20) erhaltenen Bildern bestimmt wird.

9. Verfahren nach einem der Ansprüche 1 bis 8,
**dadurch gekennzeichnet,**
**dass** die Beleuchtung mit polarisierter Beleuchtungsstrahlung erfolgt.

10. Verfahren nach einem der Ansprüche 1 bis 9,
**dadurch gekennzeichnet,**
**dass** für die Regelung der Bearbeitungsbahn zusätzlich ein Abstandssensor (7) eingesetzt wird, mit dem ein Abstand der Bearbeitungsoptik (3) zur Oberfläche (16) der Werkstücke während des Fügeprozesses gemessen wird.

11. Vorrichtung zur Überwachung und Regelung der Bearbeitungsbahn bei einem Laser-Fügeprozess, mit einem Bearbeitungskopf, der wenigstens
- eine Bearbeitungsoptik (3), über die ein eingekoppelter Bearbeitungslaserstrahl auf eine Bearbeitungsebene fokussierbar ist,
- eine Beleuchtungseinheit (26) zur Beleuchtung eines Bereichs der Bearbeitungsebene koaxial zum Bearbeitungslaserstrahl, und
- eine ortsauflösende Beobachtungseinheit (21) mit einem Bildsensor (20) aufweist, mit dem zumindest ein Teil des mit der Beleuchtungseinheit (26) homogen beleuchteten Bereichs der Bearbeitungsebene durch wenigstens einen Teil der Bearbeitungsoptik (3) erfassbar ist,
- einer Bewegungseinrichtung für den Bearbeitungskopf (3) oder zu bearbeitende Werkstücke, mit der der Bearbeitungslaserstrahl auf der Bearbeitungsbahn entlang einer Stoßfuge der Werkstücke geführt werden kann, und
- einer Auswerte- und Steuereinrichtung (19, 28, 29), die mit dem Bildsensor (20) und der Bewegungseinrichtung verbunden ist,
**dadurch gekennzeichnet, dass** die Auswerte- und Steuereinrichtung (19, 28, 29) so ausgebildet ist, dass sie aus Bildern des Bereiches, die vom Bildsensor (20) aufgenommen werden, mittels texturbasierter Bildverarbeitung die Position der Stoßfuge und einer vom Bearbeitungslaserstrahl induzierten Kapillare bestimmt und in Abhängigkeit von den jeweils erfassten Positionen der Stoßfuge und der Kapillare Steuersignale für die Führung des Bearbeitungslaserstrahls entlang der Stoßfuge an die Bewegungseinrichtung liefert.

12. Vorrichtung nach Anspruch 11,
**dadurch gekennzeichnet,**
**dass** im Bearbeitungskopf ein Abstandssensor (7) zur Messung des Abstandes zwischen dem Bearbeitungskopf und den Werkstücken integriert ist.

13. Vorrichtung nach Anspruch 12,
**dadurch gekennzeichnet,**
**dass** der Abstandssensor (7) als Doppelspaltsensor ausgebildet ist.

14. Vorrichtung nach Anspruch 12 oder 13,
**dadurch gekennzeichnet,**
**dass** die Steuer- und Auswerteeinrichtung (19, 28, 29) so ausgebildet ist, dass sie auf Basis der vom Abstandsensor (7) erhaltenen Daten Steuersignale an die Bewegungseinrichtung liefert, mit denen ein konstanter Abstand zwischen dem Bearbeitungskopf und den Werkstücken bei der Führung des Bearbeitungslaserstrahls entlang der Stoßfuge eingehalten wird.

15. Vorrichtung nach einem der Ansprüche 11 bis 14, **dadurch gekennzeichnet,**
**dass** die Vorrichtung eine Zufuhreinheit für einen Schweißdraht und eine Schweißstromquelle zum Laserstrahl-Lichtbogen-Hybridschweißen sowie eine Synchronisationseinheit (27) aufweist, die die Beleuchtungseinheit (26) und den Bildsensor (20) so zur Erzeugung von Lichtpulsen bzw. zur Bildaufnahme ansteuert, dass die Lichtpulse in Synchronisation mit den Schweißstrompulsen jeweils zeitverzögert zu den Schweißstromimpulsen und gleichzeitig mit der Bildaufnahme abgegeben werden.

## Claims

1. Method for monitoring and controlling the processing path in a laser joining process, particularly in hybrid laser-arc welding, in which
- a processing laser beam is directed through a processing optics system (3) onto a surface (16) of workpieces to be joined and guided along a butt joint of the workpieces by motion of the workpieces or the processing optics system (3) on the processing path,
- an area of the surface (16) is illuminated coaxially with the processing laser beam homogenously with illumination radiation and illumination radiation reflected from the area through least a part of the processing optics (3) is detected and evaluated spatially resolved with an image sensor (20),
**characterized in that**
- a position of the butt joint and a position of a capillary induced by the processing laser beam are determined from the images obtained from the image sensor (20) by means of texture-based image processing, and
- the processing path of the processing laser beam is controlled as a function of the respectively detected positions of the butt joint and the capillary.

2. The method of claim 1,
**characterized in that**
during hybrid laser-arc welding illumination is created with a pulsed illumination laser (26) which emits an illumination pulse in a time period between two successive current pulses synchronized in each case with current pulses for the electric arc, wherein the image is captured with the image sensor (20) at the same time as each illumination pulse occurs.

3. Method according to claim 1 or 2,
**characterized in that**
during image processing
- a feature vector is assigned to each pixel located in a predefinable area of interest of each image obtained by the image sensor (20), which is obtained by applying multiple different filter masks to the image or by analyzing or recording intensity values of the pixels surrounding the pixel in the image,
- the feature vectors of the pixels are assigned to one of several different textures by comparison with feature vectors calculated previously from training data or by cluster formation,
- a texture image is compiled from the assignments, in which each pixel of the area of interest is represented with a luminance value representing the assigned texture, and
- at least the positions of the butt joint and the capillary are determined from the texture image.

4. Method according to claim 3,
**characterized in that**
the position of the butt joint is determined by forming a gradient from at least the texture image.

5. Method according to claim 3 or 4,
**characterized in that**
the feature vectors of the pixels are assigned to one of multiple objects present in the training data by comparison with feature vectors calculated previously from training data in order to determine the position and extent of the objects in the image.

6. Method according to claim 5,
**characterized in that**
the position, length and / or width of a weld pool are determined in the image.

7. Method according to any one of claims 3 to 6,
**characterized in that**
the filter masks comprise at least different edge filters and different circular filters.

8. Method according to any one of claims 1 to 7,
**characterized in that**
during hybrid laser-arc welding a protruding length of a supplementary wire used for the hybrid welding and/or a position of a drop that has separated from the supplementary wire is also determined using texture-based image processing from the images obtained by the image sensor (20).

9. Method according to any one of claims 1 to 8,
**characterized in that**
the illumination is assured with polarized illumination radiation.

10. Method according to any one of claims 1 to 9,
**characterized in that**
a distance sensor (7) is additionally used to regulate the processing path, which sensor is used to measure a distance between the processing optics system (3) and the surface (16) of the workpieces during the joining process.

11. Device for monitoring and controlling the processing path in a laser joining process, with a processing head that includes at least
- a processing optics system (3) through which a coupled processing laser beam can be focused onto a processing plane,
- an illumination unit (26) for illuminating an area of the processing plane coaxially with the processing laser beam, and
- a spatially resolving observation unit (21) with an image sensor (20), with which at least a part of the area of the processing plane that is illuminated homogeneously by the illumination unit (26) can be detected by at least a part of the processing optics system (3),
- a motion device for the processing head (3) or workpieces to be processed, with which the processing laser beam can be guided along a butt joint of the workpieces on the processing path, and
- an evaluation and control device (19, 28, 29) which is connected to the image sensor (20) and the moving device,
**characterized in that**
the evaluation and control device (19, 28, 29) is designed in such manner that it determines the position of the butt joint and a capillary induced by the processing laser beam from images of the area that are recorded by the image sensor (20) by using texture-based image processing and delivers control signals for guiding the processing laser beam along the butt joint to the motion device on the basis of the respective detected positions of the butt joint and the capillary.

12. Device according to claim 11,
**characterized in that**
a distance sensor (7) is integrated in the processing head to measure the distance between the processing head and the workpieces.

13. Device according to claim 11,
**characterized in that**
the distance sensor (7) is a double gap sensor.

14. Device according to claim 12 or 13,
**characterized in that**
the control and evaluation device (19, 28, 29) is designed such that it delivers control signals to the motion device on the basis of the data obtained from the distance sensor (7), which signals are used to ensure a constant distance is maintained between the processing head and the workpieces while the processing laser beam is guided along the butt joint.

15. Device according to any one of claims 11 to 14,
**characterized in that**
the device comprises a feed unit for a welding wire and a welding current source for hybrid laser-arc welding, and a synchronization unit (27) that actuates the illumination unit (26) and the image sensor (20) for generating light pulses and for capturing images in such a way that the light pulses are emitted in synchronization with the welding current pulses, with a time lag relative to the welding current pulses and at the same time as the image recording in each case.

## Revendications

1. Procédé de surveillance et régulation de la voie d'usinage lors d'un processus d'assemblage au laser, notamment lors de la soudure hybride au rayon laser-arc électrique, dans lequel
- un rayon laser d'usinage est orienté par l'intermédiaire d'une optique d'usinage (3) sur une surface (16) de pièces à assembler et en déplaçant les pièces ou l'optique d'usinage (3) est guidé sur la voie d'usinage le long d'un joint d'aboutement des pièces,
- une zone de la surface (16) est illuminée de manière homogène coaxialement au rayon laser d'usinage avec un rayonnement d'illumination et le rayonnement d'illumination réfléchi par la zone est détecté et évalué par l'intermédiaire d'au moins une partie de l'optique d'usinage (3) à résolution spatiale avec un capteur d'image (20),
**caractérisé en ce que**
- d'après les images obtenues par le capteur d'image (20) au moyen d'un traitement d'image basé sur texture, une position du joint d'aboutement et une position d'un capillaire induit par le rayon laser d'usinage sont déterminées, et
- la voie d'usinage du rayon laser d'usinage est régulée en fonction des positions respectivement détectées du joint d'aboutement et du capillaire.

2. P0rocédé selon la revendication 1,
**caractérisé en ce que**
lors de la soudure hybride au rayon laser - arc électrique, l'illumination a lieu avec un laser d'illumination (26) impulsé, qui de manière respectivement synchronisée sur les impulsions de courant pour l'arc électrique émet une impulsion d'illumination dans une période temporelle entre deux impulsions de courant se succédant, dans lequel la détection d'image avec le capteur d'image (20) a lieu respectivement simultanément à l'impulsion d'illumination.

3. Procédé selon la revendication 1 ou 2, **caractérisé en ce que** lors du traitement d'images
- chaque point d'image de l'image respectivement obtenue par le capteur d'image (20), qui se trouve dans une zone intéressante prescrite de l'image, est coordonnée à un vecteur de caractéristique, qui est obtenu en utilisant plusieurs masques de filtrage différents sur l'image ou en évaluant ou enregistrant des valeurs d'intensité des points d'image entourant le point d'image dans l'image,
- les vecteurs de caractéristiques des points d'image sont coordonnées en comparant avec des vecteurs de caractéristique déterminés préalablement d'après des données d'apprentissage ou par formation de cluster d'une texture de plusieurs textures différentes,
- d'après les affectations une image de texture est générée, dans laquelle chaque point d'image de la zone intéressante est représenté avec une valeur de luminosité représentant la texture coordonnée, et
- au moins les positions du joint d'aboutement et du capillaire sont déterminées d'après l'image de texture.

4. Procédé selon la revendication 3,
**caractérisé en ce que**
la position du joint d'aboutement est déterminée par l'intermédiaire d'une formation de gradient au moins à partir de l'image de texture.

5. Procédé selon la revendication 3 ou 4,
**caractérisé en ce que**
les vecteurs de caractéristiques des points d'image sont coordonnées en comparant avec des vecteurs de caractéristique déterminés au préalable d'après des données d'apprentissage d'un des plusieurs objets présents dans les données d'apprentissage, afin de déterminer la position et l'extension des objets dans l'image.

6. Procédé selon la revendication 5,
**caractérisé en ce que**
la position, la longueur et/ou la largeur d'un bain de fusion dans l'image sont déterminés.

7. Procédé selon une des revendications 3 à 6,
**caractérisé en ce que**
les masques de filtrage comprennent au moins des filtres de bords différentes et des filtres circulaires différents.

8. Procédé selon une des revendications 1 à 7,
**caractérisé en ce que**
lors de la soudure hybride au rayon laser - arc électrique, une longueur en saillie d'un fil d'apport employé pour la soudure hybride et/ou une position d'une goutte qui se dissout du fil d'apport est déterminée au moyen d'un traitement d'image basé sur texture d'après les images obtenues par le capteur d'image (20).

9. Procédé selon une des revendications 1 à 8,
**caractérisé en ce que**
l'illumination a lieu avec un rayon d'illumination polarisé.

10. Procédé selon une des revendications 1 à 9,
**caractérisé en ce que**
pour la régulation de la voie d'usinage en outre un capteur de distance (7) est employé, avec lequel un écart de l'optique d'usinage (3) par rapport à la surface (16) de la pièce pendant le processus d'assemblage est mesuré.

11. Dispositif de surveillance et régulation de la voie d'usinage lors d'un processus d'assemblage au laser, comportant une tête d'usinage, qui présente
- au moins une optique d'usinage (3), par l'intermédiaire de laquelle un rayon laser d'usinage couplé peut être focalisé sur un plan d'usinage,
- une unité d'illumination (26) pour illuminer une zone du plan d'usinage coaxiale au rayon laser d'usinage, et
- une unité d'observation à résolution spatiale (21) comportant un capteur d'image (20), avec lequel au moins une partie de la zone illuminée de manière homogène avec l'unité d'illumination (26) du plan d'usinage peut être détectée par au moins une partie de l'optique d'usinage (3),
- un dispositif de déplacement pour la tête d'usinage (3) ou les pièces à usiner, avec lequel le rayon laser d'usinage peut être guidé sur la voie d'usinage le long d'un joint d'aboutement des pièces, et
- un dispositif d'évaluation et de commande (19, 28, 19à, qui est relié avec le capteur d'image (20) et le dispositif de déplacement,
**caractérisé en ce que**
le dispositif d'évaluation et de commande (19, 28, 29) est conçu de telle sorte qu'il détermine d'après les images de la zone, qui sont capturées par le capteur d'image (20), au moyen d'un traitement d'image basé sur texture la position du joint d'aboutement et d'un capillaire induit par le rayon laser d'usinage et délivre en fonction des positions respectivement détectées du joint d'aboutement et du capillaire des signaux de commande pour le guidage du rayon laser d'usinage le long du joint d'aboutement sur la direction de mouvement.

12. Dispositif selon la revendication 11,
**caractérisé en ce que**
dans la tête d'usinage un capteur de distance (7) pour mesurer l'écart entre la tête d'usinage et les pièces est intégré.

13. Dispositif selon la revendication 12,
**caractérisé en ce que**
le capteur de distance (7) est conçu comme un capteur à fente double.

14. Dispositif selon la revendication 12 ou 13,
**caractérisé en ce que**
le dispositif d'évaluation et de commande (19, 28, 29) est conçu de telle sorte qu'il délivre sur la base des données obtenues par le capteur de distance (7) des signaux de commande sur le dispositif de déplacement, avec lesquels un écart constant entre la tête d'usinage et les pièces lors du guidage du rayon laser d'usinage est maintenu le long du joint d'aboutement.

15. Dispositif selon une des revendications 11 à 14,
**caractérisé en ce que**
le dispositif présente une unité d'introduction pour un fil de soudure et une source de courant de soudure pour la soudure hybride au rayon laser - arc électrique ainsi qu'une unité de synchronisation (27), qui commande l'unité d'illumination (26) et le capteur d'image (20) pour générer des impulsions lumineuses, respectivement pour la capture d'images, de telle sorte que les impulsions lumineuses soient émises en synchronisation avec les impulsions de courant de soudure respectivement de manière décalées temporellement par rapport aux impulsions de courant de soudure et simultanément à la capture d'image.
